# EUROPEAN PATENT APPLICATION

(11) **EP 1 184 696 A1**
(43) Date of publication of application: **06.03.2002**
(21) Application number: 00402392.5
(22) Date of filing: 30.08.2000
(51) Int. Cl.: G02B 6/42

(54) **Self-aligning optical component assembly on a common substrate**

(71) Applicant: Corning Incorporated, Corning, New York 14831 (US)
(72) Inventor: Delprat, Daniel, c/o Corning Incorporated, Corning, NY 14831 (US)
(74) Representative: Boon, Graham Anthony

(57) **Abstract**

A self-aligining connection assembly is provided for aligning a pair of optical components (14,16) adjacent to one another. The assembly includes a stepped silicon substrate (12) having a first surface (18) vertically offset from a second surface (22). At least one rib (24,32) with angled walls (26,34) extends from the first and second surfaces such that a first supporting portion (38,40) thereof is substantially parallel to a central plane of the substrate. A first optical component having a channel formed therein engages the first supporting portion of the rib proximate the first surface of the substrate. A second optical component (16) which is larger than the first optical component and has a channel formed therein, engages the first supporting portion of the rib proximate the second surface (22) of the substrate. Although the first and second optical components have different heights relative to their core waveguides, due to the stepped configuration of the substrate, the core waveguides of the first and second optical components align.

## Description

### BACKGROUND OF THE INVENTION

### 1. Technical Field

The present invention generally relates to connectors for optical components and, more particularly, to a connector for interconnecting multiple optical components so as to precisely align the core waveguides of each of the components.

### 2. Discussion

Photonic component hybridization involves the integration of optical components and optoelectronic/photonic devices. A major concern regarding the hybrid association of different optical components is the very small positioning tolerance which is acceptable between adjacent components. For example, a final positioning accuracy on the order of plus or minus one micrometer is commonly desired.

Such small tolerances arise from the fact that each optical component in the hybrid association has a very concentrated optical signal in its guiding structure or core waveguide. This is particularly true for active components made of III/V semiconductor material. This is also true for passive components due to the compactness of the device. As such, adjacent components must be accurately positioned to assure proper functioning.

Every optical component has a given thickness between the core waveguide and the top surface of the component. This thickness commonly varies from component to component. When the components are mounted adjacent to one another, their top surfaces are typically placed adjacent to a supporting substrate. The different distances between the core waveguides and the top surfaces cause the core waveguides to misalign.

An additional problem arises due to the warpage which is commonly found within passive optical components. For example, a 30 millimeter long splitter may include a warpage of tens of microns. When the component is mounted to a substrate, the warpage causes the core waveguide to misalign relative to an adjacent core waveguide.

Although different techniques have been developed to achieve positioning accuracy of an optical component relative to a substrate, very few have been developed to achieve positioning accuracy of an optical component relative to another optical component. A widely used passive alignment technique for aligning an optical component relative to a substrate involves the use of flip-chip solder bonding. Another passive alignment technique employs stops and standoffs for positioning the elements relative to one another. Unfortunately, these alignment techniques do not account for the variations in dimensions from component to component so they do not account for the need to align adjacent core waveguides.

Another alignment technique involves the use of trapezoidal pedestals formed on the optical chip and holes formed in the substrate. Positional accuracy in the vertical direction is controlled by the precise etching of the pedestals into the substrate and the holes in the optical component. This technique provides a vertical and lateral positioning accuracy with respect to the substrate on the order of plus or minus one micrometer. However, this technique still fails to provide adequate alignment of one optical component relative to another optical component.

Accordingly, there is a need for a connection substrate which properly aligns optical components adjacent to one another such that their core waveguides align. There is also a need or a connection substrate which minimizes the effect of optical component warpage on the alignment accuracy.

### SUMMARY OF THE INVENTION

The above and other objects are provided by a self-aligning connection assembly. The assembly includes a stepped silicon substrate having a first surface and a second surface. The second surface is vertically offset from the first surface. At least one rib with angled walls extends from the first and second surfaces such that a first supporting portion thereof is substantially parallel to a central plane of the substrate. In this way, the rib has a first vertical dimension relative to the first surface of the substrate and a second vertical dimension relative to the second surface of the substrate. However, the rib has a constant vertical dimension relative to the central plane of the substrate. A first optical component having a channel formed therein engages the first supporting portion of the rib proximate the first surface of the substrate. A second optical component, which is larger than the first optical component and has a channel formed therein, engages the first supporting portion of the rib proximate the second surface of the substrate. Although the first and second optical components have different heights relative to their core waveguides, due to the stepped configuration of the substrate, the core waveguides of the first and second optical components align.

### BRIEF DESCRIPTION OF THE DRAWINGS

In order to appreciate the manner in which the advantages and objects of the invention are obtained, a more particular description of the invention will be rendered by reference to specific embodiments thereof which are illustrated in the appended drawings. Understanding that these drawings only depict preferred embodiments of the present invention and are not therefore to be considered limiting in scope, the invention will be described and explained with additional specificity and detail through the use of the accompanying drawings in which:
FIG. 1 is a perspective view of a self-aligning connection assembly according to the teachings of the present invention;
FIG. 2 is a cross-sectional view of the self-aligning connection assembly of FIG. 1 taken along line 2-2;
FIG. 3 is a cross-sectional view of the self-aligning connection assembly of FIG. 1 taken along line 3-3;
FIGS. 4A-4E are views illustrating the sequential steps for forming an active optical component and substrate subassembly of the present invention;
FIGS. 5A-5E are views illustrating the sequential steps for forming a passive optical component and substrate subassembly of the present invention;
FIGS. 6A-6E are views illustrating the sequential steps for forming an alternate embodiment passive optical component and substrate subassembly of the present invention;
FIGS. 7A-7H are perspective views illustrating the sequential steps for forming the substrate of the present invention;
FIG. 8 is a side elevational view of the self-aligning connection assembly of the present invention adapted for minimizing the effect of component warpage on the assembly;
FIG. 9 is a perspective view of the self-aligning connection assembly of FIG. 7;
FIGS. 10A-10C are views illustrating the sequential steps for mounting an active optical component on the substrate of the present invention;
FIGS. 11A-11B are views illustrating the sequential steps for mounting a passive optical component to the substrate of the present invention;
FIG. 12 is a side elevational view of a pair of passive components having an active component disposed therebetween along a common substrate;
FIG. 13 is a perspective view of the substrate and active component of FIG. 12;
FIG. 14 is a side elevational view of three substrates interconnecting an active component, a pair of passive components, and an optical fiber in series in accordance with the teachings of the present invention;
FIG. 15 is a perspective view of the first substrate illustrated in FIG. 14;
FIG. 16 is a perspective view of the second substrate illustrated in FIG. 14; and
FIG. 17 is a perspective view of the third substrate illustrated in FIG. 14.

### DETAILED DESCRIPTION OF THE PREFERRED EMBODIMENTS

The present invention is directed towards a self-aligning connection assembly for interconnecting at least a pair of optical components along a common substrate. The optical components and substrate of the assembly are configured such that the core waveguides of the optical components are accurately aligned despite any differences between the dimensions of the optical components including the distances between the core waveguide and the mounting surface of each optical device. The substrate is also configured to minimize the effect of any warpage within the optical component on the alignment accuracy.

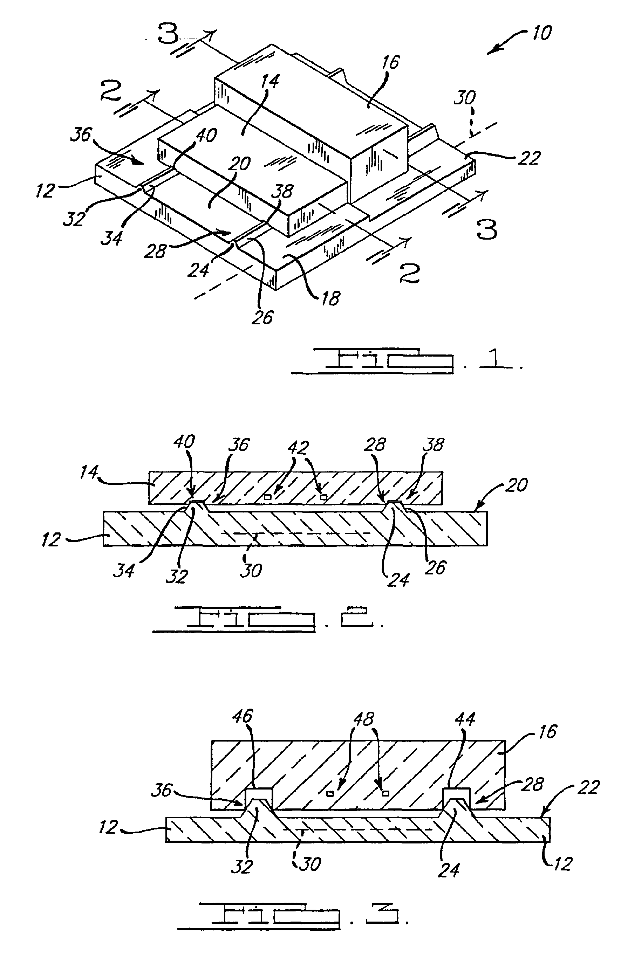

Turning now to FIG. 1, a self-aligning connection assembly incorporating the teachings of the present invention is generally illustrated at 10. The assembly 10 includes a substrate 12, a first optical component 14 and a second optical component 16. The substrate 12 includes a major surface 18 which includes a first surface or section 20 and a second surface or section 22. The second surface 22 can be vertically offset from the first surface 20 such that the substrate 12 has a stepped configuration.

A first rib 24 having tapered or angled side walls 26 extends from the first surface 20 and the second surface 22 of the substrate 12. The first rib 24 includes a supporting portion, generally indicated at 28, which extends substantially parallel to a central plane 30 of the substrate 12. As such, despite the rib 24 having a first axial dimension relative to the first surface 20 and a second, larger, axial dimension relative to the second surface 22, the supporting portion 28 has a constant axial dimension relative to the central plane 30. Preferably, the supporting portion 28 comprises a pair of co-planar line contacts defined along the side walls 26.

The substrate 12 also includes a second rib 32 with tapered or angled side walls 34 extending from the first surface 20 and the second surface 22. The second rib 32 includes a second supporting portion, generally indicated at 36, which extends substantially parallel to the central plane 30 of the substrate 12. As such, despite the second rib 32 having a first axial dimension relative to the first surface 20 and a second, larger, axial dimension relative to the second surface 22, the second supporting portion 36 has a constant axial dimension relative to the central plane 30. Preferably, the second supporting portion 36 comprises a pair of co-planar line contacts defined along the side walls 34.

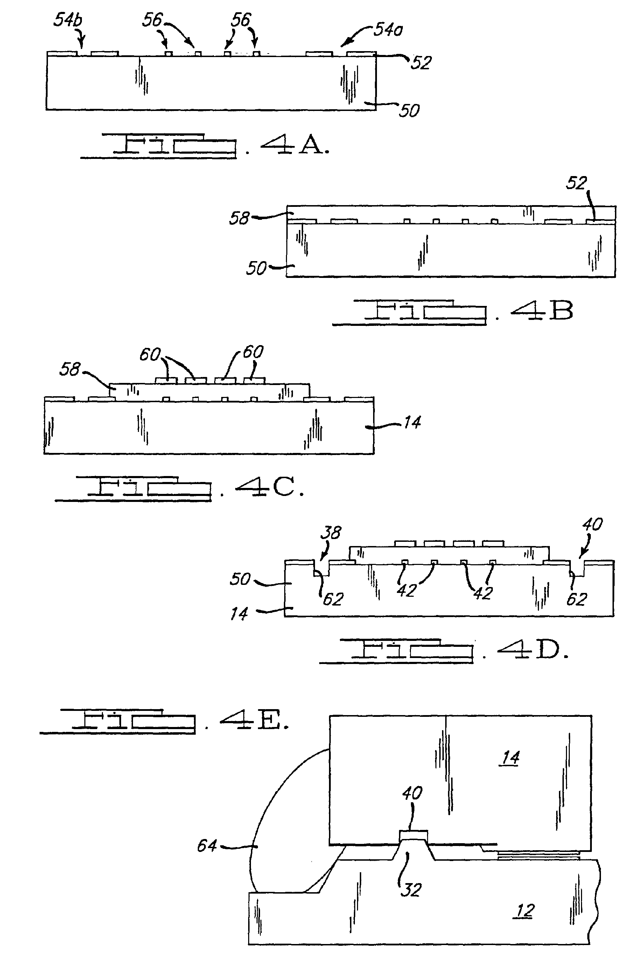

Referring now also to FIG. 2, the first optical component 14 includes a first rectangular channel 38 and a second rectangular channel 40 formed therein. The first waveguide 14 also includes a core waveguide, generally indicated at 42, inboard of channels 38 and 40. The first rib 24 of the substrate 12 engages the first optical component 14 along the supporting portion 28 adjacent the first rectangular channel 38. The second rib 32 of the substrate 12 engages the optical component 14 along the second supporting surface 36 adjacent the second rectangular channel 40.

The height to which the optical component 14 is supported above the substrate 12 depends upon the height and taper of the ribs 24 and 32 and the width of the channels 38 and 40. Preferably, the dimensions of the ribs 24 and 32 and of the channels 38 and 40 are selected to position the core waveguide 42 at a preselected position relative to the second optical component 16, the first and second supporting portions 28 and 36, or the central plane 30 of the substrate 12.

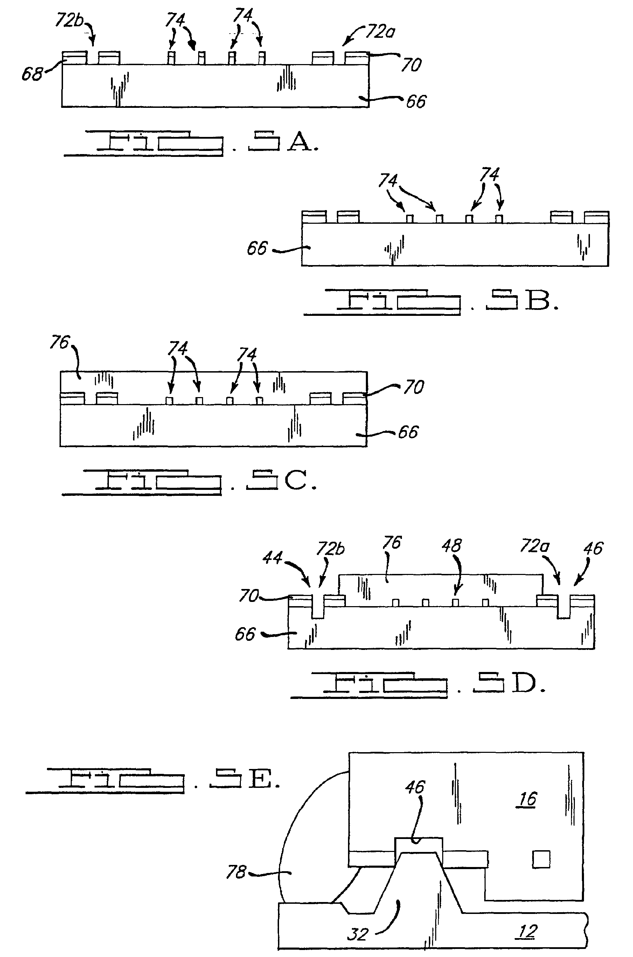

Referring now also to FIG. 3, the second optical component 16 includes a first rectangular channel 44 and a second rectangular channel 46 formed therein. The optical component 16 also includes a core waveguide, generally indicated at 48, formed therein inboard of channels 44 and 46. The first rib 24 engages the second optical component 16 along the supporting portion 28 adjacent the first channel 44. The second rib 32 engages the second optical component 16 along the second supporting portion 36 adjacent the second channel 46.

The height to which the second optical component 16 is supported above the substrate 12 depends upon the taper and height of ribs 24 and 32 and the width of channels 44 and 46. Preferably, the dimensions of the ribs 24 and 32 and of channels 44 and 46 are selected to position the core waveguide 48 at a preselected position relative to the first optical component 14, the first and second supporting portions 28 and 36, or the central plane 30 of the substrate 12. Even more preferably, the dimensions of the ribs 24 and 32, the channels 44 and 46, and the channels 38 and 40 are selected to align the core waveguide 48 with the core waveguide 42.

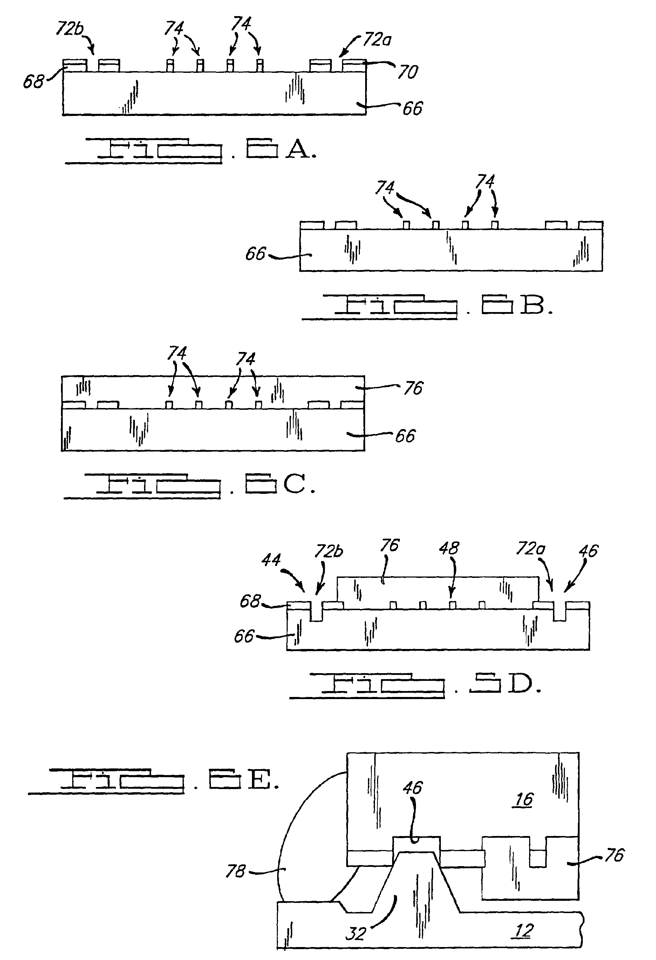

Referring now to FIGS. 4A-4F, the sequential steps for interconnecting the first optical component 14 with the substrate 12 are illustrated. In this exemplary embodiment, the first optical component is illustrated as an active optical component although a passive component could substitute therefore. Referring first to FIG. 4A, a wafer or body 50 is provided. The body 50 preferably comprises InP. Next, a waveguide layer 52 such as an InGaAsP active layer, is deposited on the body 50. The waveguide layer 52 is then patterned in a single lithographic step to define a pair of channel etching regions 54A and 54B and a core waveguide forming region 56.

Referring now to FIG. 4B, a contact layer 58 such as a p-doped InP layer is deposited over the waveguide layer 52 and exposed portions of the body 50. If desired, epitaxial regrowth may also be used to form the contact layer 58.

In FIG. 4C, the processing steps for the formation of the active optical component 14 are performed. These may include the lateral electrical confinement by proton implantation and metalization. Further, a plurality of electrical pads 60 are formed on the contact layer 58. If desired, solder may also be deposited on the pads 60 for later establishing an electrical connection between the optical component 14 and the substrate 12.

In FIG. 4D, the channels 38 and 40 are formed in the body 50 by selective chemical etching. By using a specific etching solution, vertical side walls 62 can be formed along the channels 38 and 40. The dimensions of the channels 38 and 40 are selected to correspond to the distance between the core waveguide 42 and the pads 60.

In FIG. 4E, the optical component 14 is placed on the substrate 12 such that the rib 32 is adjacent the channel 40. Although only half of the assembly is shown, the other half would be the same. The initial placement of the optical component 14 on the substrate 12 should situate the rib 32 within at least one half of the width of the channel 40. Subsequent to the initial placement of the optical component 14, an adhesive such as epoxy or glue 64 can be applied to the optical component 14 and substrate 12. During gluing (or soldering) a tool maintains the component 14 on the rib 32 by pressing.

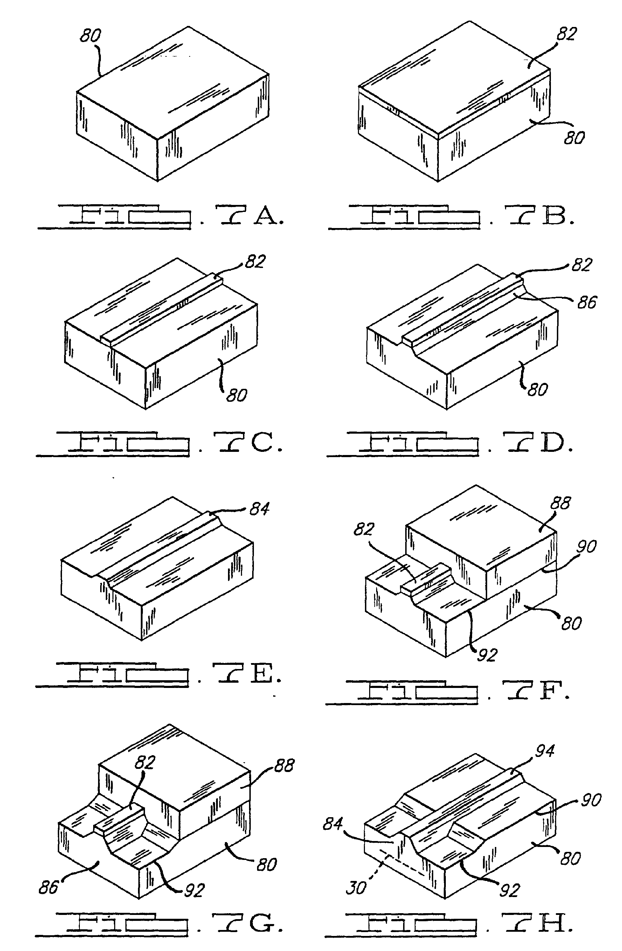

Turning now to FIGS. 5A-5E, the sequential steps for forming the second optical component 16 are illustrated. In this exemplary embodiment, the second optical component 16 is illustrated as a passive component although an active component may substitute therefore. Referring initially to FIG. 5A, a wafer or body 66 is initially provided. The body 66 preferably comprises Si or SiO₂.

A SiO₂ buffer layer and waveguide layer 68 preferably made of SiO₂ is then deposited on the body 66. A mask 70, preferably made of Si, is next deposited on the waveguide layer 68. Thereafter, the mask 70 and waveguide layer 68 are patterned in a single lithographic step to define channel forming regions 72A and 72B and a core waveguide forming region 74.

In FIG. 5B, the mask layer 70 is removed from the core waveguide forming region 74. In FIG. 5C, overclad 76, made of SiO₂, is deposited over the remaining portions of the mask layer 70, exposed portions of the body 66, and the waveguide forming region 74. In FIG. 5D, select portions of the contact layer 76 adjacent the channel forming regions 72A and 72B are removed by etching. Thereafter, the channels 44 and 46 are etched into the body 66.

It should be noted that the etching of the SiO₂ overclad layer 76 in the area of the channel forming regions 72A and 72B is blocked by the buried mask 70. This enables the channels 44 and 46 to be positioned at the desired distance relative to the core waveguide 48. If desired, after the channels 44 and 46 are formed, the remainder of the mask 70 can be removed.

Referring to FIG. 5E, the optical chip 16 is positioned on the substrate 12 such that the rib 32 engages the optical component 16 adjacent the channel 46. Although only one half of the assembly is illustrated, the other half would be the same. Thereafter, an adhesive such as an epoxy or glue 78 is applied to the optical component 16 and substrate 12. The resilient nature of the glue 78 urges the optical component 16 and substrate 12 towards one another. The interaction of the channel 46 and rib 32 controls the final positioning of the optical component 16 relative to the substrate 12.

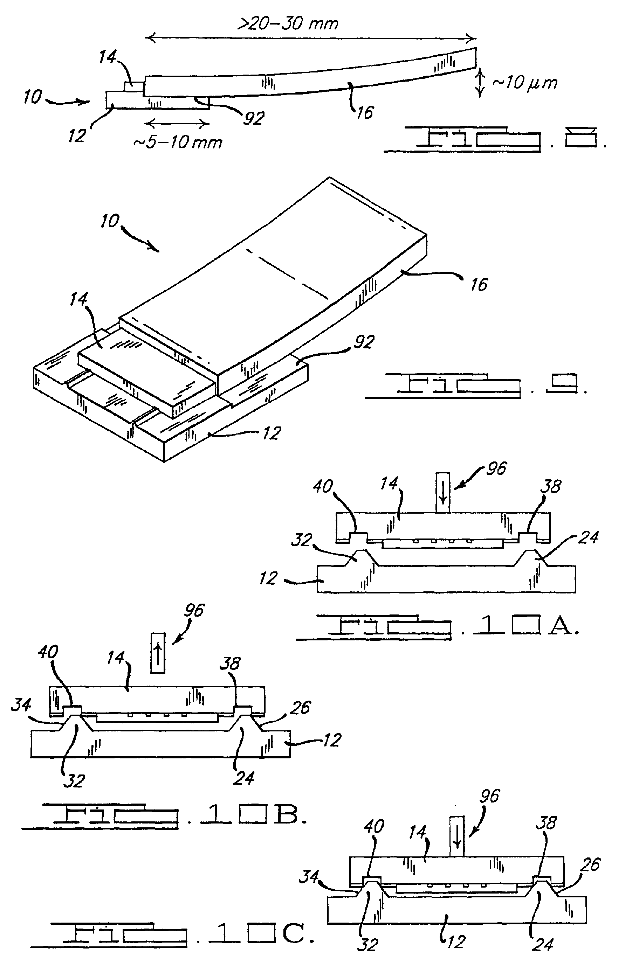

FIGS. 6A-6E depict an alternative method to achieve the optical component 16, where the overclad layer 76 is made of polymer with a refractive index matching that of silica. In the drawings, like components have been identified with like reference numbers. This polymer overclad enables use of a standard photoresist as a first mask layer 70. This first photoresist is completely removed after the core layer 68 patterning (FIG. 6B). It is no longer used as an etching blocking layer during the etching of the overclad in the area of the channel forming regions 72A and 72B. The silica core layer 68 can be directly used for blocking polymer etching as depicted in FIG. 6D.

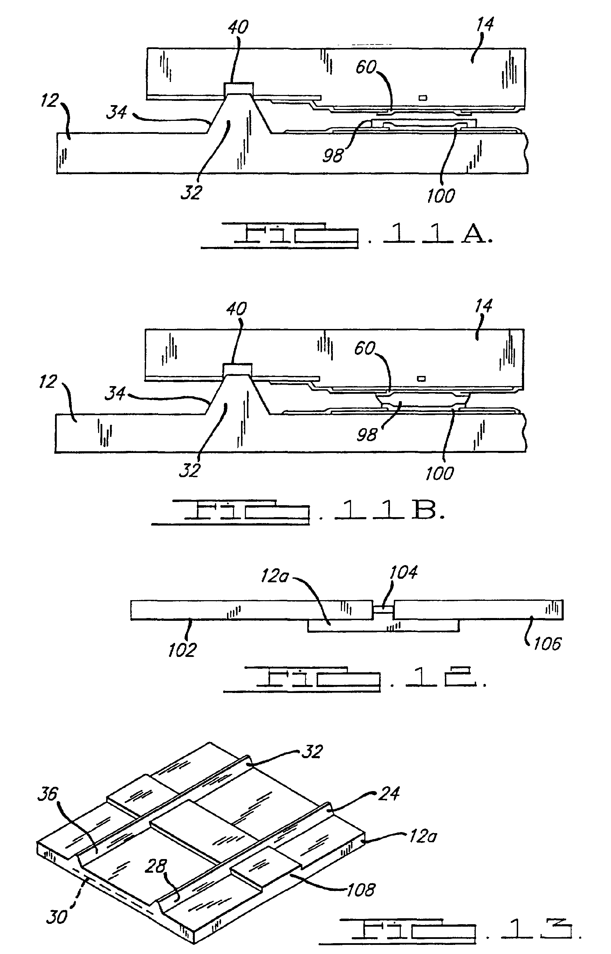

Referring now to FIGS. 7A-7H, the sequential steps for forming the substrate 12 of the present invention are illustrate. Referring to FIGS. 7A-7E collectively, a silicon wafer 80 is initially provided. A dielectric mask 82 is then deposited on the wafer 80. The dielectric mask 82 is then patterned so as to overly a rib forming region 84 of the wafer 80. Thereafter, the wafer 80 is chemically etched to yield a preliminary rib 86 under the dielectric mask 82. In FIG. 7E, the dielectric mask 82 is removed to provide rib 84 which is thereafter tapered to a desired angle using a lithographic process.

If two different heights are desired along the same rib relative to the wafer 80, the above process is skips from that illustrate in FIG. 7D to that illustrated in FIG. 7F. More particularly, after forming the preliminary rib 86 at FIG. 7D, a second dielectric layer 88 is placed over a first section 90 of the wafer 80. A second section 92 of the wafer 80 remains exposed. In FIG. 7G, etching is continued on the second section 92 of the wafer 80. This further heightens the preliminary rib 86 thereover. In FIG. 7H, both the first and second dielectric layers 82 and 88 are removed. This yields rib 84 which has a first height relative to the first section 90 of the wafer 80 and a second height relative to a second section 92 of the wafer 80. However, rib 84 has a planar top surface 94 which has a constant height relative to a central plane 30 of wafer 80.

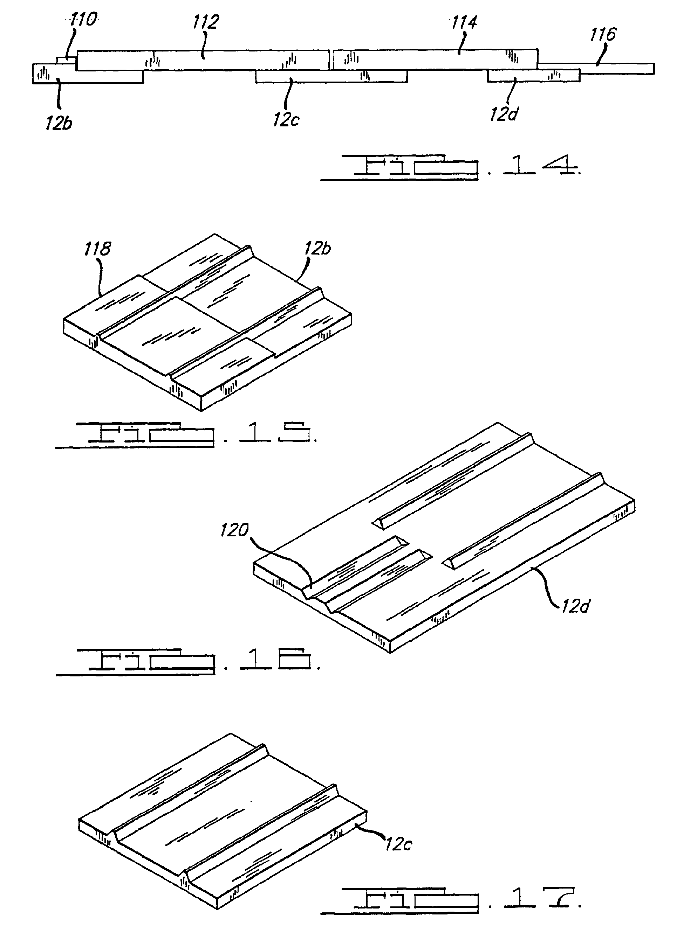

Turning now to FIGS. 8 and 9, a second aspect of the present invention is illustrated. According to this aspect, the effect of optical component warpage on alignment accuracy is minimized. More particularly, the assembly 10 includes substrate 12, first optical component 14 and second optical component 16 coupled thereto. The second optical component 16 in this exemplary embodiment comprises a 1 by 8 splitter having a 250 micrometer pitch. The second optical component 16 is illustrated as being greater than 20 to 30 millimeters long and having a warpage of approximately 10 microns. To eliminate the effect of this warpage on positioning accuracy, the second portion 92 of the substrate 12 has a length which is approximately 5 to 10 millimeters or, more preferably, which is less than 34 percent, or even more preferably less than 25 percent, of the length of the optical component 16.

Turning now to FIG. 10A-10C, an automated process for positioning the optical component 14 on the substrate 12 is illustrated. Although optical component 14 is illustrated, optical component 16 could substitute therefore. In FIG. 10A, a handling tool 96 of a flip chip machine initially positions the optical component 14 on the substrate 12. Any positioning misalignment of the optical component 14 relative to the substrate 12 is preferably less than half of the difference between the width of the channels 38 and 40 and the top width of the ribs 24 and 32.

In FIG. 10B, the optical component 14 is released by the handling tool 96 after initial positioning. The interaction of the angled walls 26 and 34 with the optical component 14 adjacent the channels 38 and 40 start to align the optical component 24 and substrate 12 relative to one another. In FIG. 10C, the handling tool 96 presses the optical component 14 in order to encourage its self-alignment and to maintain such alignment during bonding.

Turning now to FIGS. 11A and 11B, a method to bond and electrically connect the optical component 14 on the substrate 12 is illustrated. Although optical component 14 is illustrated, optical component 16 could substitute therefor. In this embodiment, the optical component 14 is an active component where electrical contact is to be made between the optical component 14 and the substrate 12.

A conductor 98 such as a conductive epoxy or a solder film is applied to a pad 100 on the substrate 12. The pad 100 is preferably quite large relative to the gap between the optical component 14 and the substrate 12. For example, the pad 100 may be greater than 80 micrometers while the gap is less than four micrometers.

When the conductor 98 is made of a solder film, it reacts during reflow to fill the gap between the pad 100 and the opposite pad 60 on the optical component 14. The reflow of the conductor 98 serves to urge the optical component 14 and substrate relative to each other such that the rib 32 interacts with the optical component 14 adjacent the channel 40. The tapered side wall 34 laterally and vertically orients the optical component 14 relative to the substrate 12.

When the conductor 98 is made of a conductive epoxy, the glue bump with an initial height higher than the final gap between the optical component 14 on opposite pad 60 is simply pressed during positioning. It is then followed by epoxy consolidation by thermal or UV curing.

Turning now to FIGS. 12-16 various embodiments of substrate 12 are illustrated. In FIG. 12, substrate 12A is employed to interconnect a first passive optical component 102, an active optical component 104 and a second passive optical component 106. Since the active component 104 is much thinner than the passive components 102 and 106, it must be elevated relative thereto to ensure proper alignment of the adjacent core waveguides. Accordingly and as best seen in FIG. 13, substrate 12A is provided with a stepped configuration including a raised central portion 108. Substrate 12A also includes ribs 24 and 32 extending therefrom. Ribs 24 and 32 include first and second supporting portions 28 and 36 which are spaced apart from the central plane 30 of the substrate 12A by a constant amount. As such, the first passive optical component 102, active optical component 104, and second passive optical component 106 are properly aligned relative to one another.

In FIG. 14, a first substrate 12B is employed to interconnect an active component 110 with a first passive component 112, a second substrate 12C is employed to interconnect the first passive component 112 with a second passive component 114, and a third substrate 12D is employed to interconnect the second passive component 114 with optical fibers 116.

As best seen in FIG. 15, since the active waveguide 110 is thinner than the passive component 112, the first substrate 12B includes a stepped configuration with an elevated portion 118 to properly align the two components relative to one another. As best seen in FIG. 16, since the first passive component 112 and the second passive component 114 have approximately equal widths, the second substrate 12C is essentially planar. As best seen in PIG. 17, since the second passive component 114 is to be coupled with optical fibers 116, the third substrate 12D includes V-shaped grooves 120.

Thus, the present invention provides a self-aligning connection assembly for interconnecting optical components having varying widths such that adjacent core waveguides are properly aligned. The self-aligning connection assembly also minimizes the effect of optical component warpage on positioning accuracy. Those skilled in the art can now appreciate from the foregoing description that the broad teachings of the present invention can be implemented in a variety of forms. Therefore, while this invention has been described in connection with particular examples thereof, the true scope of the invention should not be so limited since other modifications will become apparent to the skilled practitioner upon a study of the drawings, specification, and following claims.

## Claims

1. A self-aligning connection assembly comprising:
an optical component having a channel formed therein; and
a substrate having a rib with tapered side walls extending from a mounting surface thereof, said rib engaging said optical component adjacent said channel to orient said optical component relative to said substrate.

2. The assembly of Claim 1 wherein said channel and said rib are dimensioned so as to cooperatively determine a vertical and lateral position of said optical component relative to said substrate.

3. The assembly of Claim 2 wherein a height and taper of said rib and a width of said channel are selected to control said vertical and lateral position of said optical component.

4. The assembly of Claim 1 wherein said mounting surface of said substrate includes a first surface and a second surface, said second surface being vertically offset from said first surface.

5. The assembly of Claim 4 wherein said rib has an axial distance relative to said first surface which is greater than an axial distance of said rib relative to said second surface.

6. The assembly of Claim 5 wherein said rib has a constant axial distance relative to a central plane of said substrate.

7. The assembly of Claim 6 further comprising a second optical component having a second channel formed therein, said rib engaging said second optical chip adjacent said second channel.

8. The assembly of Claim 7 wherein said first optical component is supported over said first surface and said second optical component is supported over said second surface such that a core waveguide of said first component aligns with a core waveguide of said second component.

9. The assembly of Claim 8 wherein said first surface has a length which is less than about 34% of a length of said second component.

10. A self-aligning connection assembly comprising:
a stepped silicon substrate including a first surface and a second surface vertically offset from said first surface;
a first rib with angled walls extending from said first and second surfaces such that a first supporting portion thereof is substantially equidistantly spaced from a central plane of said substrate;
a first optical component having a first channel formed therein, said first optical component engaging said first supporting portion of said first rib proximate said first surface of said substrate; and
a second optical component having a second channel formed therein, said second optical component engaging said first supporting portion of said first rib proximate said second surface of said substrate.

11. The assembly of Claim 10 wherein said substrate includes a second rib with angled walls extending from said first and second surfaces spaced apart from said first rib, said second rib including a second supporting portion substantially equidistantly spaced from said central plane of said substrate.

12. The assembly of Claim 11 wherein said first optical component includes another channel formed therein engaging said second supporting portion of said second rib proximate said first surface of said substrate.

13. The assembly of Claim 11 wherein said second optical component includes another channel formed therein engaging said second supporting portion of said second rib proximate said second surface of said substrate.

14. The assembly of Claim 10 wherein:
said first optical component further comprises:
a first mounting surface; and
a first core waveguide;
said second component further comprises:
a second mounting surface; and
a second core waveguide; and
wherein a distance between said first mounting surface and said first core waveguide is less than a distance between said second mounting surface and said second core waveguide.

15. A method of forming an optical component subassembly comprising:
preparing an optical component including the steps of:
providing a wafer;
depositing a waveguide layer on said wafer;
patterning said waveguide layer to define a core waveguide forming region and a channel forming region;
depositing a contact layer over said waveguide layer and said body;
removing a portion of said contact layer adjacent said channel forming region; and
etching said wafer to form a channel therein;
preparing a substrate including the steps of:
providing a substrate;
forming a rib along a mounting surface of said substrate with angled walls; and
placing said optical component on said substrate such that said rib engages said optical component adjacent said channel.

16. The method of Claim 15 further comprising:
removing said contact layer from said core waveguide forming region.

17. The method of Claim 15 wherein said step of preparing said substrate further comprises:
depositing a first dielectric mask on said substrate;
patterning said first dielectric mask to define a rib forming region;
etching said substrate to form a preliminary rib along said rib forming region;
depositing a second dielectric mask over a first portion of said substrate to prevent further formation of said preliminary rib proximate said first portion of said substrate;
further etching a second portion of said substrate to further form said preliminary rib proximate said second portion of said substrate; and
removing said first and second dielectric layers to yield said rib.

18. The method of Claim 15 wherein said step of placing said optical chip on said substrate further comprises:
using a flip chip machine to initially place said optical component on said substrate such that said channel is within one half of a channel opening dimension of said optical component;
releasing said optical component such that said optical component may initially align relative to said substrate by the interaction of said rib and said optical component adjacent said channel; and
pressing said optical chip against said substrate.

19. The method of Claim 15 wherein said step of placing said optical component on said substrate further comprises:
bonding said optical component to said substrate using an adhesive.

20. The method of Claim 15 wherein said step of placing said optical component on said substrate further comprises:
bonding said optical component to said substrate using a solder film.

21. The method of Claim 15 wherein said contact layer further comprises polymer.

22. The method of Claim 15 wherein said contact layer further comprises silica.
